# EUROPEAN PATENT APPLICATION

(11) **EP 4 675 707 A1**
(43) Date of publication of application: **07.01.2026**
(21) Application number: 24763923.0
(22) Date of filing: 27.02.2024
(51) Int. Cl.: H01M 4/525, H01M 4/36, H01M 4/505

(54) **POSITIVE ELECTRODE ACTIVE MATERIAL FOR LITHIUM SECONDARY BATTERY, POSITIVE ELECTRODE FOR LITHIUM SECONDARY BATTERY, AND LITHIUM SECONDARY BATTERY**

(30) Priority: 28.02.2023 JP 2023029623
(71) Applicant: Sumitomo Chemical Company, Limited, Tokyo 103-6020 (JP)
(72) Inventor: TOI Shinji, Niihama-shi, Ehime 792-8521 (JP)
(74) Representative: Vossius & Partner Patentanwälte Rechtsanwälte mbB
(86) International application number: PCT/JP2024/007106
(87) International publication number: WO 2024/181444

(57) **Abstract**

A positive electrode active material for a lithium secondary battery, contains a lithium metal composite oxide and barium sulfate, in which the lithium metal composite oxide is represented by Formula (1).

Li[Liₐ(Ni_{(1-b-c)}M1_{b}M2_{c})₁₋ₐ]O₂ ... (1)

(in Formula (1), M1 is at least one element of Co, Mn, or Al, M2 is at least one element of Ti, Zn, Zr, Mg, Ca, B, Si, Nb, W, Mo, Ta, or P, and Formula (1) satisfies -0.1 ≤ a ≤ 0.2, 0 < b ≤ 0.4, 0 ≤ c ≤ 0.4, and 0 < b + c ≤ 0.4)

## Description

### TECHNICAL FIELD

The present invention relates to a positive electrode active material for a lithium secondary battery, a positive electrode for a lithium secondary battery, and a lithium secondary battery.

Priority is claimed on Japanese Patent Application No. 2023-029623, filed February 28, 2023, the content of which is incorporated herein by reference.

### BACKGROUND ART

A positive electrode active material for a lithium secondary battery is used in a positive electrode constituting a lithium secondary battery. The positive electrode active material for a lithium secondary battery contains a lithium metal composite oxide.

For example, Patent Document 1 discloses a lithium transition metal-based compound powder containing a main component raw material corresponding to the lithium metal composite oxide and an oxide containing at least one or more elements selected from Mo, W, Nb, Ta, and Re.

Patent Document 1 discloses that such a lithium transition metal-based compound powder improves rate performance and output characteristics in use as a positive electrode material for a lithium secondary battery, and thus a decrease in cost, suppression of voltage rise, and improvement of safety can be achieved.

### Citation List

### Patent Document

Patent Document 1: JP-A-2008-305777

### SUMMARY OF INVENTION

### Technical Problem

As the application field of the lithium secondary battery expands, there is a demand for development of the positive electrode active material for a lithium secondary battery, which can provide a lithium secondary battery having a longer life. Examples of a phenomenon that shortens the life of the lithium secondary battery include swelling of the lithium secondary battery, which occurs during charging. It is known that the phenomenon is caused by gas generated by a side reaction occurring during the charging of the lithium secondary battery.

E The present invention has been made in view of the above-described circumstance, and an object of the present invention is to provide a positive electrode active material for a lithium secondary battery, in which gas is unlikely to be generated during charging of a lithium secondary battery, a positive electrode for a lithium secondary battery using the same, and a lithium secondary battery.

### Solution to Problem

An aspect of the present invention includes [1] to [7].
[1] A positive electrode active material for a lithium secondary battery, containing a lithium metal composite oxide and barium sulfate, in which the lithium metal composite oxide is represented by Formula (1),

   Li[Liₐ(Ni_{(1-b-c)}M1_{b}M2_{c})₁₋ₐ]O₂ ... (1)

   (in the Formula (1), M1 is at least one element of Co, Mn, or Al, M2 is at least one element of Ti, Zn, Zr, Mg, Ca, B, Si, Nb, W, Mo, Ta, or P, and Formula (1) satisfies - 0.1 ≤ a ≤ 0.2, 0 < b ≤ 0.4, 0 ≤ c ≤ 0.4, and 0 < b + c ≤ 0.4).
[2] The positive electrode active material for a lithium secondary battery according to [1], in which the total amount of substance of the barium sulfate with respect to the total amount of substance of the positive electrode active material for a lithium secondary battery is 0.01 mol% or more and 3.0 mol% or less.
[3] The positive electrode active material for a lithium secondary battery according to [1] or [2], in which a BET specific surface area of the positive electrode active material for a lithium secondary battery is 2.0 m²/g or less.
[4] The positive electrode active material for a lithium secondary battery according to any one of [1] to [3], in which (B/A) which is an average particle diameter B of the barium sulfate with respect to an average particle diameter A of the lithium metal composite oxide is 1.0 or less.
[5] The positive electrode active material for a lithium secondary battery according to any one of [1] to [4], in which a pH at 25°C of a liquid obtained by mixing and filtering the positive electrode active material for a lithium secondary battery and water at a mass ratio of 1:1 is 12.5 or less.
[6] A positive electrode for a lithium secondary battery, containing the positive electrode active material for a lithium secondary battery according to any one of [1] to [5].
[7] A lithium secondary battery including the positive electrode for a lithium secondary battery according to [6].

### Advantageous Effects of Invention

With the above-described aspect, it is possible to provide a positive electrode active material for a lithium secondary battery, in which gas is unlikely to be generated during charging of a lithium secondary battery, a positive electrode for a lithium secondary battery using the same, and a lithium secondary battery.

### BRIEF DESCRIPTION OF DRAWINGS

[FIG. 1] A schematic diagram of a positive electrode active material for a lithium secondary battery according to the aspect of the present invention.
[FIG. 2] A SEM image of the positive electrode active material for a lithium secondary battery according to the aspect of the present invention.
[FIG. 3] A SEM-EDX image of the positive electrode active material for a lithium secondary battery according to the aspect of the present invention.
[FIG. 4] A schematic view representing an example of a lithium secondary battery according to the aspect of the present invention.
[FIG. 5] A schematic view representing an example of an all-solid-state lithium secondary battery according to the aspect of the present invention.

### DESCRIPTION OF EMBODIMENTS

Hereinafter, the positive electrode active material for a lithium secondary battery according to the aspect of the present invention will be described. In a plurality of embodiments to be described below, preferable examples or conditions may be shared. In addition, in the specification of the present application, each term is defined as follows.

In the specification of the present application, a metal composite compound will be referred to as "MCC"; a lithium metal composite oxide will be referred to as "LiMO"; and a positive electrode active material for a lithium secondary battery (cathode active material for a lithium secondary battery) will be referred to as "CAM".

"Ni" refers to a nickel atom, not a nickel metal. Similarly, "Co", "Li", and the like also each refer to a cobalt atom, a lithium atom, or the like. A lithium secondary battery refers to a lithium ion secondary battery.

In a case where a numerical range is described as, for example, "1 to 10 µm", the numerical range means a range from 1 µm to 10 µm, and means a numerical range including 1 µm as a lower limit value and 10 µm as an upper limit value. In addition, the upper limit value and the lower limit value of the numerical range can be optionally combined. Furthermore, numerical ranges of the respective physical properties, compositions, manufacturing conditions, and the like can be optionally combined.

### [Composition analysis]

A composition of LiMO can be measured by dissolving CAM in an acid or an alkali according to the measurement element, and then measuring the dissolved CAM using an ICP emission spectrometer. The measurement results of elements other than S and Ba (elements described in Formula (1) later) are associated with Formula (1) to obtain the composition of LiMO. As the ICP emission spectrometer, for example, Optima 7300 (manufactured by Perkin Elmer Inc.) can be used.

The CAM is particle-like, is an aggregate of particles, and includes primary particles and secondary particles. In the specification of the present application, the "primary particles" means particles in which no clear grain boundary is visible from the particle surface in a case of being observed in a visual field magnified 5,000 to 20,000 times with a scanning electron microscope or the like. The "secondary particles" mean particles in which a plurality of the above-described primary particles are three-dimensionally bonded with a gap. That is, the secondary particles are an aggregate of the primary particles. The secondary particles have a spherical shape or a substantially spherical shape. In general, the secondary particles are formed by aggregation of 10 or more of the primary particles.

### [BET specific surface area]

A BET specific surface area is a value which is measured by a BET (Brunauer-Emmett-Teller) method. Nitrogen gas is used as an adsorbed gas in the measurement of the BET specific surface area. For example, the BET specific surface area (unit: m²/g) can be measured using a BET specific surface area meter (for example, Macsorb (registered trademark) manufactured by Mountech Co., Ltd.) after drying 1 g of a CAM powder in a nitrogen atmosphere at 105°C for 30 minutes.

### <CAM>

The CAM according to the present embodiment contains LiMO and barium sulfate, and the LiMO is represented by Formula (1).

Li[Liₐ(Ni_{(1-b-c)}M_{1b}M2_{c})₁₋ₐ]O₂ ... (1)

(in Formula (1), M1 is at least one element of Co, Mn, or Al, M2 is at least one element of Ti, Zn, Zr, Mg, Ca, B, Si, Nb, W, Mo, Ta, or P, and Formula (1) satisfies -0.1 ≤ a ≤ 0.2, 0 < b ≤ 0.4, 0 ≤ c ≤ 0.4, and 0 < b + c ≤ 0.4)

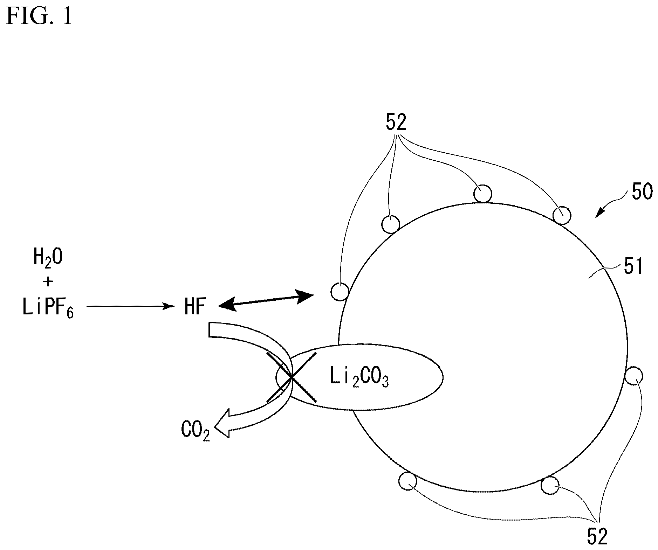

FIG. 1 is a schematic diagram of the CAM according to the present embodiment. CAM 50 contains particle-like LiMO 51 and particle-like barium sulfate 52. The barium sulfate 52 is positioned on a surface of the LiMO 51. A suppression mechanism of gas during charging of the lithium secondary battery will be described below with reference to FIG. 1.

The CAM is obtained by mixing an MCC containing an element other than Li, and a lithium compound. Therefore, the CAM may contain the lithium compound which is the raw material. In addition, lithium carbonate may be generated by a reaction between the lithium compound in the CAM and carbon dioxide in the atmosphere.

LiPF₆ is widely used as a solute of an electrolytic solution of the lithium secondary battery. The LiPF₆ reacts with water during charging to generate hydrofluoric acid. When the hydrofluoric acid reacts with the lithium carbonate, carbon dioxide, that is, gas is generated.

On the other hand, the CAM 50 contains the barium sulfate 52. Therefore, the hydrofluoric acid reacts with the barium sulfate. As a result, the reaction between the lithium carbonate and the hydrofluoric acid is suppressed, and the gas is less likely to be generated.

In FIG. 1, the barium sulfate 52 is positioned on the surface of the LiMO 51, but the present embodiment is not limited to this. It is sufficient that the CAM 50 contains the LiMO 51 and the barium sulfate 52, and a part of the barium sulfate 52 may not be positioned on the surface of the LiMO 51. Since a large amount of lithium carbonate is present on the surface of LiMO 51, from the viewpoint of efficiently suppressing the reaction between the lithium carbonate and the hydrofluoric acid and making it difficult to generate the gas, it is preferable that the barium sulfate 52 is present on the surface of the LiMO 51. When the barium sulfate 52 is present on the surface of the LiMO 51, it is preferable that at least a part of the surface of the LiMO 51 is exposed so as not to inhibit insertion and desorption reaction of lithium ions.

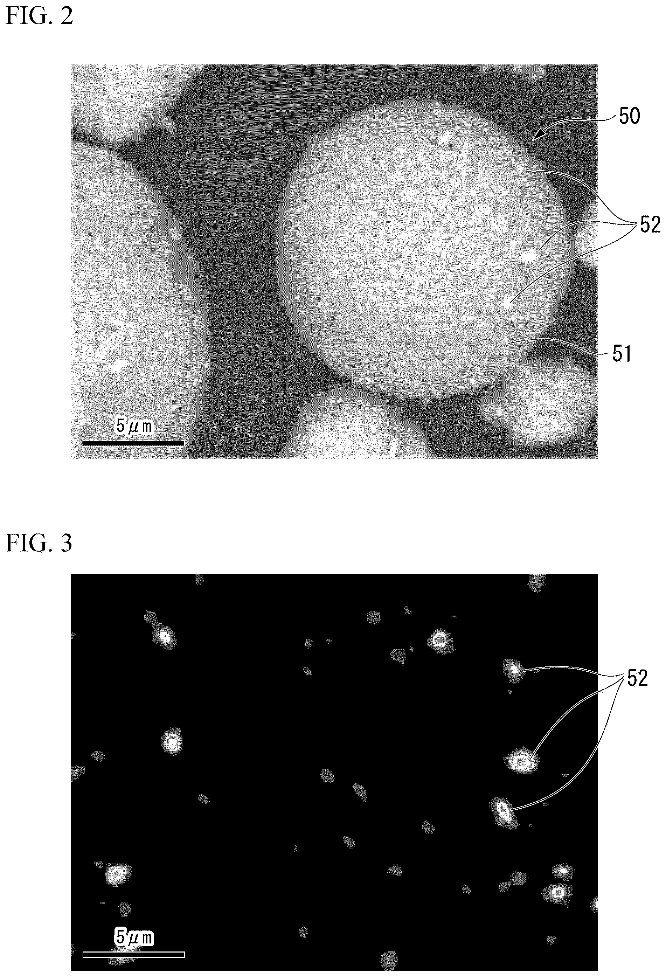

FIG. 2 is a SEM image of the CAM 50. FIG. 3 is a SEM-EDX image in which Ba of the CAM 50 is mapped. The SEM image is an image obtained by a scanning electron microscope, SEM-EDX is a scanning electron microscope-energy dispersive X-ray spectroscopy, and the SEM-EDX image is an image obtained by the measurement with the SEM-EDX. In FIG. 2, white particles match the position of Ba in FIG. 3. In addition, the white particles coincide with the position of S (not shown). From these results, it can be seen that the white particles are the barium sulfate 52. It can be seen that the barium sulfate 52 is positioned on the surface of the LiMO 51.

The barium sulfate is less likely to become a hydroxide in water compared to other sulfates such as magnesium sulfate and calcium sulfate, and thus can be stably present even in the electrolytic solution. Therefore, the barium sulfate can suppress the reaction between the hydrofluoric acid and the lithium carbonate and has a high effect of suppressing gas, as compared with the magnesium sulfate and calcium sulfate.

In order to further reduce the generation of gas, the total amount of substance of the barium sulfate contained in the CAM with respect to the total amount of substance of the CAM is preferably 0.01 mol% or more, more preferably 0.05 mol% or more, still more preferably 0.08 mol% or more, and particularly preferably 0.1 mol% or more. From the viewpoint of further reducing the generation of gas and preventing a decrease in battery capacity, the total amount of substance of the barium sulfate with respect to the total amount of substance of the CAM is preferably 3.0 mol% or less, more preferably 2.5 mol% or less, and still more preferably 2.0 mol% or less. Examples of the total amount of substance of the barium sulfate include 0.01 to 3.0 mol%, 0.05 to 2.5 mol%, 0.08 to 2.0 mol%, and 0.1 to 2.0 mol%.

### [Measurement of total amount of substance of barium sulfate]

The total amount of substance of the barium sulfate can be measured by the following method using ICP emission spectrometry. First, the CAM is measured with the SEM-EDX, and the distribution positions of Ba and S are observed to confirm that Ba and S are present at the same position. As a result, it is possible to confirm that the CAM contains the barium sulfate. Next, the CAM is measured by ICP emission spectrometry to measure the Ba amount in the CAM. The obtained Ba amount is converted into a barium sulfate amount, and the total amount of substance of the barium sulfate with respect to the total amount of substance of the CAM is calculated. As a device used for the measurement by ICP emission spectrometry, for example, optima 7300 manufactured by Perkin Elmer Inc. can be used. As a device used for the measurement by the SEM-EDX, for example, Schottky Field Emission Scanning Electron Microscope (manufactured by JEOL Ltd., JSM-7900F) equipped with X-Max 150 as an EDX detector (manufactured by Oxford Instruments) can be used.

A BET specific surface area of the CAM is preferably 2.0 m²/g or less, more preferably 1.95 m²/g or less, and still more preferably 1.90 m²/g or less. In addition, the BET specific surface area of the CAM is preferably 0.1 m²/g or more, more preferably 0.15 m²/g or more, and still more preferably 0.20 m²/g or more. Examples of the BET specific surface area include 0.1 to 2.0 m²/g, 0.15 to 1.95 m²/g, and 0.20 to 1.90 m²/g.

When CAM having a BET specific surface area equal to or more than the above-described lower limit value is used, it is easy to improve output characteristics of the lithium secondary battery. When CAM having a BET specific surface area equal to or less than the above-described upper limit value is used, a contact area between the CAM and the electrolytic solution is less likely to increase, and gas due to decomposition of the electrolytic solution is less likely to be generated. Therefore, when the CAM contains barium sulfate and the content thereof is controlled such that the BET specific surface area of the CAM is equal to or less than the above-described upper limit value, the gas can be further suppressed.

(B/A) which is an average particle diameter B of the barium sulfate with respect to an average particle diameter A of the LiMO is preferably 1.0 or less, more preferably 0.9 or less, still more preferably 0.8 or less, and particularly preferably 0.7 or less. The lower limit value of B/A is, for example, 0.01, 0.02, or 0.03. Examples of B/A include 0.01 to 0.9, 0.02 to 0.8, and 0.03 to 0.7. When B/A is in the above-described range, dispersibility is excellent, and thus the gas can be further suppressed.

### [Calculation method of B/A]

A and B are measured using the SEM-EDX described above. First, a SEM-EDX image of the CAM at a magnification of 2,000 to 10,000 times is obtained. Next, a secondary particle diameter of each of 20 or more of the LiMO and a secondary particle diameter of each of 20 or more of the barium sulfate are measured. In this case, since the composition of the particles observed by the SEM-EDX can be evaluated by element mapping, the LiMO and the barium sulfate can be distinguished from each other, and thus each secondary particle diameter can be measured. An average value is calculated from the obtained secondary particle diameters of the LiMO to obtain A, and an average value is calculated from the obtained secondary particle diameters of the barium sulfate to obtain B. Next, B/A is calculated.

A pH at 25°C of a liquid obtained by mixing and filtering the CAM and water at a mass ratio of 1:1 is preferably 12.5 or less and more preferably 12.4 or less. When the pH of the liquid is 12.5 or less, gelation of the positive electrode mixture at the time of electrode production can be prevented, and the effect of suppressing the gas can be further enhanced. The lower limit value of the pH of the liquid is not particularly limited, and examples thereof include 10.0 and 11.0. Examples of the pH of the liquid include 10.0 to 12.5 and 11.0 to 12.4. The pH of the liquid is measured after mixing the CAM with water, stirring the mixture for 5 minutes or more, and filtering the mixture.

In the present embodiment, whether or not the gas is less likely to be generated is confirmed by the following method. Specifically, a lithium secondary battery containing the CAM is produced, charged, stored under a predetermined condition, and then the amount of gas generated is measured.

### [Measurement of amount of gas generated]

### (Production of positive electrode for lithium secondary battery)

The CAM, a conductive material, and a binder are kneaded at a ratio of CAM:conductive material:binder = 92:5:3 (mass ratio) to prepare a paste-like positive electrode mixture. During the preparation of the positive electrode mixture, N-methyl-2-pyrrolidone is used as an organic solvent. Acetylene black is used as the conductive material. Polyvinylidene fluoride is used as the binder.

The obtained positive electrode mixture is applied onto a 20 µm-thick Al foil which is to serve as a current collector, dried in a vacuum at 60°C for 1 hour, and dried in a vacuum at 150°C for 8 hours, thereby obtaining a positive electrode for a lithium secondary battery. An electrode area of the positive electrode for a lithium secondary battery is set to 34.96 cm².

### (Production of negative electrode for lithium secondary battery)

A paste-like negative electrode mixture is prepared by adding and kneading artificial graphite, styrene-butadiene rubber (SBR), and carboxymethyl cellulose (CMC) in proportions in which a composition of artificial graphite:SBR:CMC = 96.5:2:1.5 (mass ratio) is achieved. During the preparation of the negative electrode mixture, pure water is used as a solvent.

The obtained negative electrode mixture is applied onto a 10 µm-thick Cu foil which is to serve as a current collector, dried in a vacuum at 60°C for 1 hour, and dried in a vacuum at 120°C for 8 hours, thereby obtaining a negative electrode for a lithium secondary battery. An electrode area of the negative electrode for a lithium secondary battery is set to 37.44 cm².

### (Production of lithium secondary battery)

A 16 µm-thick separator (porous film made of polyethylene) is placed on the negative electrode produced by (Production of negative electrode for lithium secondary battery), the positive electrode for a lithium secondary battery, produced by (Production of positive electrode for lithium secondary battery), is placed thereon, and the laminate is wrapped with an aluminum laminate film. 1000 µl of an electrolytic solution is injected thereto, and the aluminum laminate is sealed with a vacuum packaging machine to produce a lithium secondary battery (pouch type). As the electrolytic solution, a solution obtained by dissolving LiPF₆ with a proportion of 1.3 mol/l in a mixed solution of ethylene carbonate, dimethyl carbonate, and ethyl methyl carbonate at a volume ratio of 16:10:74 is used.

The amount of gas generated is measured by the following method using the lithium secondary battery produced by the above-described method.

### (Measuring method)

The lithium secondary battery produced by the above-described method is charged to SOC of 10% at a test temperature of 25°C and 0.05 CA, left at a test temperature of 60°C for 10 hours, subjected to constant current constant voltage charging to 4.3 V at a test temperature of 25°C and 0.1 CA, and charged until the current reaches 0.05 CA. Furthermore, the lithium secondary battery is discharged at 0.2 CA to 2.5 V. Thereafter, charging and discharging at 0.2 CA are performed for 2 cycles.

Thereafter, a volume of the lithium secondary battery is measured by an Archimedes method to obtain a volume before the storage. The Archimedes method is a method of measuring the actual volume of the entire lithium secondary battery from a difference between the aerial weight and the underwater weight of the lithium secondary battery using an automatic specific gravity meter.

Next, the lithium secondary battery is charged to 4.3 V and stored in a thermostatic chamber at 60°C for 7 days. Thereafter, a volume of the lithium secondary battery which has been discharged to 2.5 V at a current value of 0.2 CA is measured by the Archimedes method to obtain a volume after the storage. The amount of gas generated (unit: cc/g) is obtained from the difference between the volume after storage and the volume before storage. The mass (g) in the unit of the amount of gas generated is the standard for the weight of the CAM.

The test of storing the lithium secondary battery in a charged state in a thermostatic chamber at 60°C for 7 days is a state in which side reactions are very likely to occur as compared with normal temperature, and is a state in which the gas is likely to be generated. That is, the above-described test is an accelerated test assuming that the lithium secondary battery is stored at normal temperature in a charged state for a long period of time. In the above-described test, when the amount of gas generated is small, it can be evaluated that the gas is less likely to be generated even in a case where the lithium secondary battery is stored at normal temperature in a charged state for a long period of time.

The LiMO is represented by Formula (1) described above.

From the viewpoint of obtaining a lithium secondary battery having a high cycle retention rate and hardly generating the gas, a is more preferably -0.05 or more, and still more preferably 0 or more. In addition, from the viewpoint of obtaining a lithium secondary battery having a high initial Coulombic efficiency and hardly generating the gas, a is preferably 0.15 or less, and more preferably 0.10 or less.

Examples of a include 0 to 0.2, -0.05 to 0.15, and 0 to 0.10.

From the viewpoint of obtaining a lithium secondary battery having a high battery capacity and hardly generating the gas, b is preferably 0.05 or more, more preferably 0.06 or more, and still more preferably 0.07 or more. From the viewpoint of obtaining a lithium secondary battery having a high cycle retention rate and hardly generating the gas, b is preferably 0.2 or less, and more preferably 0.1 or less.

Examples of b include more than 0 and 0.2 or less, 0.05 to 0.4, 0.06 to 0.2, and 0.07 to 0.1.

In a case where LiMO contains the M2, from the viewpoint of obtaining a lithium secondary battery having a low battery internal resistance, c is more than 0, preferably 0.005 or more and more preferably 0.05 or more. c is preferably 0.35 or less, and more preferably 0.30 or less.

Examples of c include more than 0 and 0.4 or less, 0.005 to 0.35, and 0.05 to 0.30.

From the viewpoint of obtaining a lithium secondary battery having a high cycle retention rate and hardly generating the gas, b + c is preferably 0.05 or more, and more preferably 0.06 or more. In addition, b + c is preferably 0.3 or less, more preferably 0.2 or less, and still more preferably 0.1 or less.

Examples of b + c include 0.05 to 0.3, 0.06 to 0.2, and 0.06 to 0.1.

From the viewpoint of obtaining a lithium secondary battery having a high cycle retention rate, the M2 is preferably one or more elements selected from the group consisting of Ti, Mg, W, B, Nb, and Zr, and more preferably one or more elements selected from the group consisting of W, B, Nb, and Zr.

A crystal structure of the LiMO is a layered structure, and preferably a hexagonal crystal structure or a monoclinic crystal structure. The crystal structure of the CAM can be confirmed by a powder X-ray diffraction method.

The hexagonal crystal structure belongs to any one space group selected from the group consisting of P3, P3₁, P3₂, R3, P-3, R-3, P312, P321, P3₁12, P3₁21, P3₂12, P3₂21, R32, P3m1, P31m, P3c1, P31c, R3m, R3c, P-31m, P-31c, P-3m1, P-3c1, R-3m, R-3c, P6, P6₁, P6₅, P6₂, P6₄, P6₃, P-6, P6/m, P6₃/m, P622, P6₁22, P6₅22, P6₂22, P6₄22, P6₃22, P6mm, P6cc, P6₃cm, P6₃mc, P-6m2, P-6c2, P-62m, P-62c, P6/mmm, P6/mcc, P6₃/mcm, and P6₃/mmc.

In addition, the monoclinic crystal structure belongs to any one space group selected from the group consisting of P2, P2₁, C2, Pm, Pc, Cm, Cc, P2/m, P2₁/m, C2/m, P2/c, P2₁/c, and C2/c.

Among the above, in order to obtain a lithium secondary battery having a high discharge capacity and hardly generating the gas, the crystal structure of the LiMO is still more preferably a hexagonal crystal structure belonging to the space group R-3m or a monoclinic crystal structure belonging to the space group C2/m.

### <Method for manufacturing CAM>

A method for manufacturing the above-described CAM will be described.

### (1) Production of MCC

The MCC may be any of a metal composite hydroxide, a metal composite oxide, and a mixture thereof. The metal composite hydroxide and the metal composite oxide contain Ni, M1, and M2 at a mole ratio represented by Expression (1') as an example. The elements of M1 and M2 in Expression (1') and the preferred ranges of b and c are the same as those of M1, M2, b, and c in Formula (1) described above.

Ni:M1:M2 = (1-b-c):b:c (1')

Hereinafter, a method for manufacturing the MCC containing Ni and M1 will be described as an example. The method for manufacturing the MCC includes a step of preparing a metal composite hydroxide containing Ni and M1. During the preparation of the metal composite hydroxide, M2 may be added. The metal composite hydroxide can be produced by a batch-type co-precipitation method or a continuous co-precipitation method.

Specifically, a metal composite hydroxide represented by Ni_{(1-b)}M1_{b}(OH)₂ is produced by reacting a nickel salt solution with a metal salt solution of M1 according to a continuous co-precipitation method described in JP-A-2002-201028.

A nickel salt which is a solute of the nickel salt solution is not particularly limited, and for example, at least one of nickel sulfate, nickel nitrate, nickel chloride, or nickel acetate can be used.

A metal salt of M1, which is a solute of the metal salt solution of M1, is not particularly limited, and for example, a sulfate, a nitrate, a chloride, or an acetate of M1 can be used. Examples thereof include cobalt sulfate, cobalt nitrate, cobalt chloride, cobalt acetate, manganese sulfate, manganese nitrate, manganese chloride, manganese acetate, aluminum sulfate, aluminum nitrate, aluminum chloride, and aluminum acetate.

The nickel salt solution and the metal salt solution of M1 are used at a proportion corresponding to the compositional ratio of Ni_{(1-b)}M1_{b}(OH)₂ described above. That is, in the nickel salt solution and the metal salt solution of M1, the mole ratio of Ni and M1 is used at a proportion corresponding to (1-b):b. In addition, as a solvent of these solutions, water is used.

A complexing agent is a compound capable of forming a complex with ions of Ni and M1 in an aqueous solution. Examples thereof include an ammonium ion feeder, hydrazine, ethylenediaminetetraacetic acid, nitrilotriacetic acid, uracil diacetic acid, and glycine.

Examples of the ammonium ion feeder include ammonium salts such as ammonium hydroxide, ammonium sulfate, ammonium chloride, ammonium carbonate, and ammonium fluoride.

The complexing agent may not be contained; and in a case where the complexing agent is contained, a mole ratio of an amount of the complexing agent contained in a mixed solution of the nickel salt solution, the metal salt solution of M1, and the complexing agent is more than 0 and 2.0 or less with respect to the total number of moles of the nickel salt and the metal salt of M1.

In order to adjust the pH value of the mixed solution, an aqueous solution of an alkali metal hydroxide is added to the mixed solution before the pH of the mixed solution changes from alkaline to neutral. The alkali metal hydroxide is, for example, sodium hydroxide or potassium hydroxide.

The value of pH in the specification of the present application is defined as a value measured in a case where the temperature of the mixed solution is 40°C. In a case where the temperature of the mixed solution sampled in the reaction vessel is not 40°C, the mixed solution is heated or cooled to 40°C, and then the pH is measured.

During the reaction, the temperature of the reaction vessel is controlled, for example, within a range of 20°C to 80°C, preferably 30°C to 70°C. In addition, in the reaction, the pH value of the mixed solution in the reaction vessel is controlled, for example, in a range of 9 to 13.

A reaction precipitate formed in the reaction vessel is neutralized under stirring. The time for neutralization of the reaction precipitate is, for example, 1 to 20 hours.

Various gases, for example, an inert gas such as nitrogen, argon, and carbon dioxide, an oxidizing gas such as an air and oxygen, or a mixed gas thereof, may be supplied into the reaction vessel.

After the above reaction, the obtained reaction precipitate is washed and isolated. As the isolation, for example, a method of dewatering a slurry containing the reaction precipitate by centrifugal separation, suction filtration, or the like is used.

The isolated reaction precipitate is dried and sieved as necessary to obtain the metal composite hydroxide.

In a case where the MCC is a metal composite oxide, the metal composite hydroxide is heated to produce the metal composite oxide.

A heating temperature is preferably 400°C to 700°C and more preferably 450°C to 680°C. In a case where the heating temperature is 400°C to 700°C, a metal composite oxide in which the metal composite hydroxide is sufficiently oxidized and the BET specific surface area is in an appropriate range is obtained.

A time for which the above-described heating temperature is maintained is, for example, 0.1 to 20 hours. A temperature rising rate to the above-described heating temperature is, for example, 50 to 400 °C/hour. In addition, as the heating atmosphere, it is possible to use an air, oxygen, nitrogen, argon, or a mixed gas thereof.

The MCC can be manufactured by the above-described steps.

### (2) Mixing of MCC with lithium compound

Examples of the lithium compound include at least one of lithium carbonate, lithium nitrate, lithium acetate, lithium hydroxide, lithium hydroxide hydrate, lithium oxide, lithium chloride, or lithium fluoride. Among the above, any one of lithium hydroxide, lithium hydroxide hydrate, or lithium carbonate, or a mixture thereof is preferable.

The lithium compound and the MCC are mixed in consideration of the compositional ratio of a final target product to produce the mixture. Specifically, the amount (mole ratio) of Li contained in the lithium compound with respect to the total amount of 1 of elements other than the oxygen atom (for example, Ni, M1, and M2), contained in the MCC, is preferably 0.98 or more, more preferably 1.00 or more, and still more preferably 1.01 or more. A calcined product is obtained by calcining the mixture of the lithium compound and the MCC. The upper limit value of the above-described amount (mole ratio) of Li is preferably 1.20 or less, and more preferably 1.10 or less. By mixing the MCC and the lithium compound under the above-described conditions, the pH of the above-described liquid at 25°C can be adjusted to be within the above-described range.

The mixture of the MCC and the lithium compound may be preliminarily calcined to produce a reactant, and the reactant may be calcined. The preliminarily calcining is calcining at a temperature lower than a calcining temperature in a case of calcining the reactant. The calcining temperature during the preliminary calcining is in a range of 400°C or higher and lower than 700°C. The preliminary calcining may be performed a plurality of times.

### (3) Calcining of mixture or reactant (calcining step)

The mixture or the reactant is calcined in a calcining furnace. A calcining temperature is preferably 650°C to 950°C, more preferably 670°C to 920°C, and still more preferably 700°C to 900°C. When the calcining temperature is equal to higher than the above-described lower limit value, LiMO having a firm crystal structure can be obtained. In addition, when the calcining temperature is equal to or lower than the above-described upper limit value, volatilization of lithium ions on the particle surface of the LiMO can be reduced.

The calcining temperature in the specification of the present application means the temperature of the atmosphere in the calcining furnace, and refers to the highest temperature of temperatures retained in the calcining step (hereinafter, referred to as the highest retention temperature). In a case of including a plurality of calcining stages, the calcining temperature means a temperature of a stage in which the calcining is performed at the highest temperature, among the calcining stages.

A retention time in the preliminary calcining and the calcining step is preferably 3 to 50 hours and more preferably 4 to 20 hours. When the above-described retention time is the above-described upper limit value, volatilization of lithium ions is suppressed, and the deterioration of battery performance is suppressed. When the above-described retention time is equal to or more than the above-described lower limit value, the development of crystals is promoted, and the deterioration of battery performance is suppressed.

A temperature rising rate to the highest retention temperature is preferably 80 °C/hour or more, more preferably 100 °C/hour or more, and particularly preferably 150 °C/hour or more. The temperature rising rate to the highest retention temperature is calculated from the time taken to reach the highest retention temperature from the time when the temperature rising started.

The calcining step may have a plurality of calcining stages having different calcining temperatures. For example, the calcining step may include a first calcining stage and a second calcining stage in which the calcining is performed at a higher temperature than the first calcining stage. Furthermore, the calcining step may have a calcining stage that is performed at a different calcining temperature for a different calcining time.

The mixture or the reactant of the MCC and the lithium compound may be calcined in the presence of an inert melting agent. The inert melting agent is added to the extent that the initial capacity of the lithium secondary battery using the CAM is not impaired, and may remain in the calcined product. As the inert melting agent, for example, those described in WO2019/177032A1 can be used.

The calcining furnace used in the calcining is not particularly limited, and for example, any of a continuous-type static calcining furnace or a fluid calcining furnace may be used. Examples of the continuous-type static calcining furnace include a tunnel furnace and a roller hearth kiln. As the fluidized calcining furnace, a rotary kiln may be used.

By setting each condition of the calcining step to the above-described range, the BET specific surface area of the CAM and the pH of the above-described liquid at 25°C can be adjusted to the above-described ranges.

The LiMO is obtained by the above-described steps.

### (4) Mixing of LiMO and barium sulfate

The LiMO and the barium sulfate are mixed with each other. A mixing means is not particularly limited, and the mixing can be carried out, for example, using a mortar or a mixer.

The barium sulfate is mixed with the LiMO at a proportion of preferably 0.01 to 3.0 mol%, more preferably 0.05 to 2.5 mol%, and still more preferably 0.08 to 2.0 mol% with respect to the total amount of substance of the LiMO.

In order to easily adhere the barium sulfate to the surface of the LiMO, it is preferable that D₅₀ of the barium sulfate to be used is smaller than that of LiMO.

The D₅₀ of LiMO is preferably 1 to 20 µm and more preferably 5 to 15 µm.

The D₅₀ of the barium sulfate is preferably 0.1 to 10 µm and more preferably 0.5 to 5 µm.

### [Measurement of D₅₀ of LiMO and barium sulfate]

The D₅₀ of LiMO can be measured by the following method.

First, 2 g of powdery LiMO is put into 50 ml of a 0.2% by mass sodium hexametaphosphate aqueous solution to obtain a dispersion liquid in which the LiMO is dispersed. Next, a particle size distribution of the obtained dispersion liquid is measured with a laser diffraction particle size distribution meter to obtain a volume-based cumulative particle size distribution curve. In the obtained cumulative particle size distribution curve, a value of a particle diameter at 50% cumulative from the fine particle side is the D₅₀ (µm) of LiMO.

As the laser diffraction particle size distribution analyzer, for example, MS2000 manufactured by Malvern Panalytical Ltd. can be used.

The D₅₀ of the barium sulfate can be measured by the following method.

First, a powdery barium sulfate is put into an ethanol solution, and a dispersion liquid is obtained by dispersing the powdery barium sulfate with an ultrasonic cleaning device for 10 minutes. Next, a particle size distribution of the obtained dispersion liquid is measured with a laser diffraction particle size distribution meter to obtain a volume-based cumulative particle size distribution curve. In the obtained cumulative particle size distribution curve, a value of a particle diameter at 50% cumulative from the fine particle side is the D₅₀ (µm) of the barium sulfate.

As the laser diffraction particle size distribution analyzer, for example, MT-3300EXII manufactured by Nikkiso Co., Ltd. can be used.

By mixing the LiMO and the barium sulfate under the above-described conditions, the total amount of substance of the barium sulfate in the CAM, the BET specific surface area, the B/A, and the pH of the above-described liquid at 25°C can be adjusted to the above-described ranges.

### (5) Optional washing step

Before mixing the LiMO with the barium sulfate, the obtained LiMO may be washed with a washing liquid such as water and an alkaline washing liquid. Examples of the alkaline washing liquid include aqueous solutions of one or more anhydrides selected from the group consisting of lithium hydroxide, sodium hydroxide, potassium hydroxide, lithium carbonate, sodium carbonate, potassium carbonate, and ammonium carbonate, aqueous solutions of hydrated products of the anhydrides, and ammonia.

In the washing step, examples of a method of bringing the washing liquid and the LiMO into contact with each other include a method of adding the LiMO to each washing liquid and stirring the washing liquid; a method of spraying the LiMO with each washing liquid as shower water; and a method of adding the LiMO to each washing liquid, stirring the washing liquid, separating the LiMO from each washing liquid, and spraying the separated LiMO with each washing liquid as shower water.

The temperature of the washing liquid used for the washing is preferably 15°C or lower, more preferably 10°C or lower, and still more preferably 8°C or lower. When the temperature of the washing liquid is controlled to a temperature which is within the above-described range and at which the washing liquid does not freeze, it is possible to suppress excessive elution of lithium ions from the crystal structure of the LiMO into the washing liquid during the washing. The washed LiMO may be dried as appropriate. In addition, the LiMO may be appropriately crushed before washing.

By adjusting the washing step within the range of the above-described conditions, the BET specific surface area of the CAM and the pH value of the above-described liquid at 25°C can be adjusted.

The CAM can be manufactured as described above.

### <Lithium secondary battery>

Next, a configuration of a suitable lithium secondary battery in a case of using the CAM according to the present embodiment will be described.

In addition, a positive electrode suitable for a lithium secondary battery (hereinafter, may be referred to as a positive electrode) in a case of using the CAM according to the present embodiment will be described.

Furthermore, a lithium secondary battery suitable as a positive electrode application will be described.

An example of the lithium secondary battery suitable for a case in which the CAM according to the present embodiment is used has a positive electrode, a negative electrode, a separator interposed between the positive electrode and the negative electrode, and an electrolytic solution disposed between the positive electrode and the negative electrode.

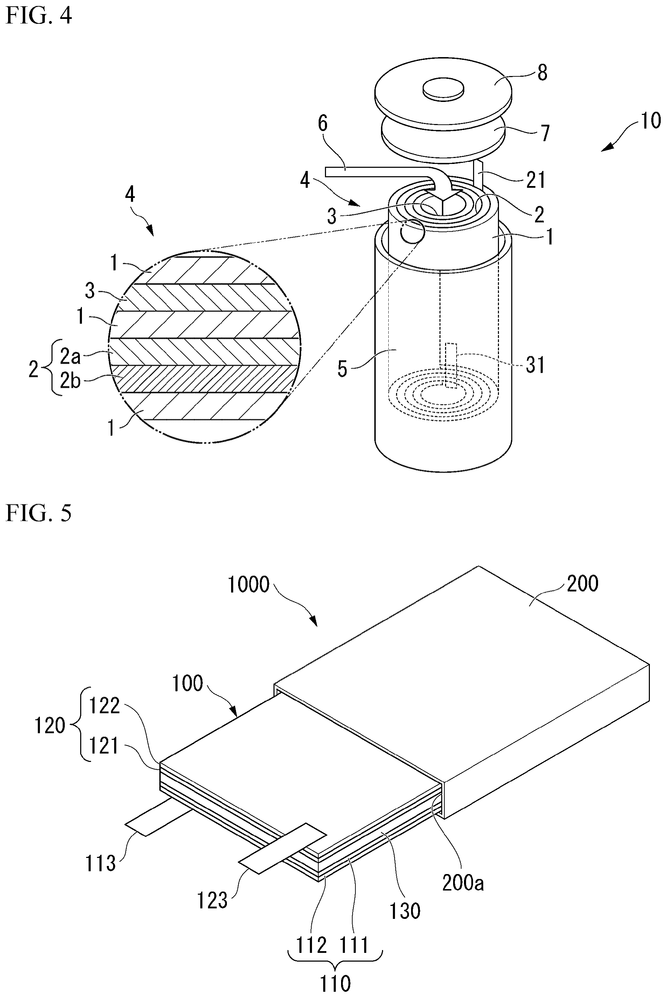

FIG. 4 is a schematic view showing an example of the lithium secondary battery. For example, a cylindrical lithium secondary battery 10 is manufactured as described below.

First, as shown in the partially enlarged view of FIG. 4, a pair of separators 1 having a strip shape, a strip-shaped positive electrode 2 having a positive electrode lead 21 at one end, and a strip-shaped negative electrode 3 having a negative electrode lead 31 at one end are laminated in order of the separator 1, the positive electrode 2, the separator 1, and the negative electrode 3 are wound to form an electrode group 4.

The positive electrode 2 includes, for example, a positive electrode active material layer 2a containing the CAM and a positive electrode current collector 2b having the positive electrode active material layer 2a formed on one surface thereof. The positive electrode 2 can be produced by first preparing a positive electrode mixture containing the CAM, a conductive material, and a binder, and supporting the positive electrode mixture on one surface of the positive electrode current collector 2b to form a positive electrode active material layer 2a.

As an example of the negative electrode 3, an electrode in which a negative electrode material mixture containing a negative electrode active material (not shown) is supported on a negative electrode current collector, and an electrode consisting of a negative electrode active material alone are exemplary examples, and the negative electrode 3 can be produced in a manner similar to that for the positive electrode 2.

Next, the electrode group 4 and an insulator (not shown) are accommodated in a battery can 5, and a can bottom is sealed. The electrode group 4 is impregnated with an electrolytic solution 6, and an electrolyte is disposed between the positive electrode 2 and the negative electrode 3. Furthermore, the upper portion of the battery can 5 is sealed with a top insulator 7 and a sealing body 8, whereby the lithium secondary battery 10 can be produced.

Examples of a shape of the electrode group 4 include a columnar shape in which the cross-sectional shape is a circle, an ellipse, a rectangle, or a rectangle with rounded corners, in a case where the electrode group 4 is cut in a direction perpendicular to a winding axis.

In addition, as the shape of the lithium secondary battery having such an electrode group 4, a shape that is specified by IEC60086, which is a standard for batteries specified by the International Electrotechnical Commission (IEC) or by JIS C 8500, can be adopted. For example, shapes such as a cylindrical shape and a square shape can be exemplary examples.

Furthermore, the lithium secondary battery is not limited to the above-described winding-type configuration, and may have a lamination-type configuration of a laminated structure in which the positive electrode, the separator, the negative electrode, and the separator are repeatedly stacked. As the lamination-type lithium secondary battery, a so-called coin-type battery, button-type battery, or paper-type (or sheet-type) battery can be exemplary examples.

For the positive electrode, the separator, the negative electrode, and the electrolytic solution constituting the lithium secondary battery, for example, the configurations, materials, and production methods described in [0113] to [0140] of WO2022/113904A1 can be used.

### <All-solid-state lithium secondary battery>

The CAM according to the present embodiment can be used as a CAM of an all-solid-state lithium secondary battery.

FIG. 5 is a schematic view showing an example of the all-solid-state lithium secondary battery according to the present embodiment. An all-solid-state lithium secondary battery 1000 shown in FIG. 5 has a laminate 100 having a positive electrode 110, a negative electrode 120, and a solid electrolyte layer 130, and an exterior body 200 accommodating the laminate 100. In addition, the all-solid-state lithium secondary battery 1000 may have a bipolar structure in which a positive electrode active material and a negative electrode active material are disposed on both sides of a current collector. Specific examples of the bipolar structure include the structures described in JP-A-2004-95400. A material which configures each member will be described below.

The positive electrode 110 has a positive electrode active material layer 111 and a positive electrode current collector 112. The positive electrode active material layer 111 contains the above-described CAM and a solid electrolyte. In addition, the positive electrode active material layer 111 may contain a conductive material and a binder.

The negative electrode 120 has a negative electrode active material layer 121 and the negative electrode current collector 122. The negative electrode active material layer 121 contains a negative electrode active material. In addition, the negative electrode active material layer 121 may contain a solid electrolyte and a conductive material.

The laminate 100 may have an external terminal 113 which is connected to a positive electrode current collector 112 and an external terminal 123 which is connected to a negative electrode current collector 122. In addition, the all-solid-state lithium secondary battery 1000 may have a separator between the positive electrode 110 and the negative electrode 120.

The all-solid-state lithium secondary battery 1000 further has an insulator (not shown) which insulates the laminate 100 and the exterior body 200 from each other and a sealant (not shown) which seals an opening portion 200a of the exterior body 200.

As the exterior body 200, a container formed of a highly corrosion-resistant metal material such as aluminum, stainless steel or nickel-plated steel can be used. In addition, as the exterior body 200, a container obtained by processing a laminate film having at least one surface on which a corrosion resistant process has been carried out into a bag shape can also be used.

As the shape of the all-solid-state lithium secondary battery 1000, for example, shapes such as a coin-type, a button type, a paper-type (or a sheet-type), a cylindrical type, a square shape, and a laminate type (pouch type) can be exemplary examples.

As the example of the all-solid-state lithium secondary battery 1000, a form in which one laminate 100 is provided is shown in the drawing, but the present embodiment is not limited thereto. The all-solid-state lithium secondary battery 1000 may have a configuration in which the laminate 100 is used as a unit cell and a plurality of unit cells (laminates 100) is sealed inside the exterior body 200.

For the all-solid-state lithium secondary battery, for example, the configurations, materials, and production methods described in [0151] to [0181] of WO2022/113904A1 can be used.

### Examples

Hereinafter, the present invention will be described in detail with examples, but the present invention is not limited to the following description.

### <Composition analysis>

A composition of LiMO was measured by the above-described method of [Composition analysis]. The total amount of substance of barium sulfate with respect to the total amount of substance of the CAM was measured according to [Measurement of total amount of substance of barium sulfate] described above.

### <Measurement of BET specific surface area>

A BET specific surface area was measured by the method of [BET specific surface area] described above.

### <B/A>

B/A was calculated according to [Calculation method of B/A] described above.

### <Measurement of D₅₀ of LiMO and barium sulfate>

D₅₀ of LiMO and D₅₀ of barium sulfate were measured by the method described in [Measurement of D₅₀ of LiMO and barium sulfate] above. Calcium sulfate described later was also measured by the same method as that for the barium sulfate.

### <Measurement of amount of gas generated>

An amount of gas generated was measured according to the method described in [Measurement of amount of gas generated] above.

### (Example 1)

After water was poured into a reaction vessel equipped with a stirrer and an overflow pipe, a sodium hydroxide aqueous solution was added thereto, and the liquid temperature was retained at 70°C.

A mixed raw material solution was prepared by mixing a nickel sulfate aqueous solution, a manganese sulfate aqueous solution, and an aluminum sulfate aqueous solution at a ratio at which a mole ratio of Ni, Mn, and Al was 93:3.5:3.5.

Next, the mixed raw material solution was continuously added to a reaction vessel under stirring, using an ammonium sulfate aqueous solution as a complexing agent. A sodium hydroxide aqueous solution was added dropwise thereto as appropriate so that the pH of the mixed solution in the reaction vessel was 10.7 (in a case of being measured at a liquid temperature of 40°C), and a reaction precipitate was obtained. The reaction precipitate was washed, dewatered with a centrifuge, and dried at 105°C for 20 hours to obtain a metal composite hydroxide 1.

The metal composite hydroxide 1 was heated in an atmospheric air at 650°C for 5 hours to obtain MCC1 as a metal composite oxide.

The MCC1 and a lithium hydroxide monohydrate powder were weighed and mixed at a mole ratio of Li/(Ni + Mn + Al) = 1.03, and the mixture was preliminarily calcined at 650°C for 5 hours in an oxygen atmosphere. Furthermore, the mixture was calcined at 770°C for 5 hours in an oxygen atmosphere to obtain LiMO-1.

The LiMO-1 was crushed, and 2.0 mol% of barium sulfate was mixed with respect to the total amount of substance of LiMO-1 to obtain CAM-1. D₅₀ of LiMO-1 during the mixing was 13.8 µm, and D₅₀ of barium sulfate was 1.66 µm.

In a case where a compositional analysis of CAM-1 was carried out and the result was matched with the compositional formula (1) of LiMO, a was 0.03, (1 - b - c) was 0.93, b was 0.07, c was 0.00, and the element M1 was Mn and Al.

### (Example 2)

The LiMO-1 was crushed, washed with water, and dried at 120°C for 10 hours in a vacuum atmosphere to obtain LiMO-2. 1.0 mol% of barium sulfate was mixed with respect to the total amount of substance of LiMO-2 to obtain CAM-2. D₅₀ of LiMO-2 during the mixing was 13.4 µm, and D₅₀ of barium sulfate was 1.87 µm.

In a case where a compositional analysis of CAM-2 was carried out and the result was matched with the compositional formula (1) of LiMO, a was 0.00, (1 - b - c) was 0.93, b was 0.07, c was 0.00, and the element M1 was Mn and Al.

### (Comparative Example 1)

CAM-C1 was obtained by the method described in Example 1, except that the barium sulfate was not mixed.

In a case where a compositional analysis of CAM-C1 was carried out and the result was matched with the compositional formula (1) of LiMO, a was 0.03, (1 - b - c) was 0.93, b was 0.07, c was 0.00, and the element M1 was Mn and Al.

### (Comparative Example 2)

The LiMO-1 was crushed, and 2.0 mol% of calcium sulfate was mixed with respect to the total amount of substance of LiMO-1 to obtain CAM-C2. D₅₀ of calcium sulfate during the mixing was 2.87 µm.

In a case where a compositional analysis of CAM-C2 was carried out and the result was matched with the compositional formula (1) of LiMO, a was 0.03, (1 - b - c) was 0.93, b was 0.07, c was 0.00, and the element M1 was Mn and Al. In addition, in the SEM-EDX acquired in [Measurement of total amount of substance of barium sulfate] described above, Ca was observed instead of Ba, and thus it was confirmed that calcium sulfate was present in CAM-C3.

Table 1 shows the compounds other than LiMO in CAM, the total amount of substance of barium sulfate in CAM, the BET specific surface area, the B/A, the pH value of the liquid at 25°C, and the amount of gas generated for CAM-1 and CAM-2 of Examples 1 and 2 and CAM-C1 and CAM-C2 of Comparative Examples 1 and 2.

**[Table 1] [0142]**

| | Example 1 | Example 2 | Comparative Example 1 | Comparative Example 2 |
|---|---|---|---|---|
| Compound other than LiMO in CAM | Barium sulfate | Barium sulfate | None | Calcium sulfate |
| Total amount of substance of barium sulfate in CAM [mol%] | 2 | 1 | 0 | 0 |
| BET specific surface area [m²/g] | 0.72 | 1.25 | 0.69 | 0.74 |
| B/A | 0.12 | 0.14 | - | - |
| pH value of liquid at 25°C | 12.2 | 12.3 | 11.9 | 12.0 |
| Amount of gas generated [cc/g] | 0.5 | 0.25 | 0.67 | 0.71 |

From the comparison between Examples 1 and 2 and Comparative Example 1, it was found that the amount of gas generated was reduced in a case where the CAM contained the barium sulfate.

In Comparative Example 2 in which the calcium sulfate was mixed instead of the barium sulfate, the amount of gas generated was high. It is considered that, in the CAM having a sulfate other than the barium sulfate, as in Comparative Example 2, since the sulfate was likely to be a hydroxide in the electrolytic solution and the reaction between hydrofluoric acid and lithium carbonate could not be suppressed, the gas could not be suppressed.

### INDUSTRIAL APPLICABILITY

According to the present invention, it is possible to provide a CAM in which gas is unlikely to be generated during charging of a lithium secondary battery, a positive electrode for a lithium secondary battery using the same, and a lithium secondary battery.

### REFERENCE SIGNS LIST

1: Separator, 2: Positive electrode, 2a: Positive electrode active material layer, 2b: Positive electrode current collector, 3: Negative electrode, 4: Electrode group, 5: Battery can, 6: Electrolytic solution, 7: Top insulator, 8: Sealing body, 10: Lithium secondary battery, 21: Positive electrode lead, 31: Negative electrode lead, 40: Powder compaction treatment device, 41, 42, 43: Jig, 50: CAM, 51: LiMO, 52: Barium sulfate, 100: Laminate, 110: Positive electrode, 111: Positive electrode active material layer, 112: Positive electrode current collector, 113: External terminal, 120: Negative electrode, 121: Negative electrode active material layer, 122: Negative electrode current collector, 123: External terminal, 130: Solid electrolyte layer, 200: Exterior body, 200a: Opening portion, 1000: All-solid-state lithium secondary battery

## Claims

1. A positive electrode active material for a lithium secondary battery, comprising:
a lithium metal composite oxide; and
barium sulfate,
wherein the lithium metal composite oxide is represented by Formula (1),
Li[Liₐ(Ni_{(1-b-c)}M1_{b}M2_{c})₁₋ₐ]O₂ ... (1)
(in Formula (1), M1 is at least one element of Co, Mn, or Al, M2 is at least one element of Ti, Zn, Zr, Mg, Ca, B, Si, Nb, W, Mo, Ta, or P, and Formula (1) satisfies -0.1 ≤ a ≤ 0.2, 0 < b ≤ 0.4, 0 ≤ c ≤ 0.4, and 0 < b + c ≤ 0.4).

2. The positive electrode active material for a lithium secondary battery according to Claim 1,
wherein a total amount of substance of the barium sulfate with respect to a total amount of substance of the positive electrode active material for a lithium secondary battery is 0.01 mol% or more and 3.0 mol% or less.

3. The positive electrode active material for a lithium secondary battery according to Claim 1 or 2,
wherein a BET specific surface area of the positive electrode active material for a lithium secondary battery is 2.0 m²/g or less.

4. The positive electrode active material for a lithium secondary battery according to Claim 1 or 2,
wherein (B/A) which is an average particle diameter B of the barium sulfate with respect to an average particle diameter A of the lithium metal composite oxide is 1.0 or less.

5. The positive electrode active material for a lithium secondary battery according to Claim 1 or 2,
wherein a pH of a liquid obtained by mixing and filtering the positive electrode active material for a lithium secondary battery and water at a mass ratio of 1:1 at 25°C is 12.5 or less.

6. A positive electrode for a lithium secondary battery, comprising:
the positive electrode active material for a lithium secondary battery according to Claim 1 or 2.

7. A lithium secondary battery comprising:
the positive electrode for a lithium secondary battery according to Claim 6.
